# EUROPÄISCHE PATENTSCHRIFT

(11) **EP 1 153 549 B1**
(45) Veröffentlichungstag und Bekanntmachung des Hinweises auf die Patenterteilung: **17.11.2004**
(21) Anmeldenummer: 01110883.4
(22) Anmeldetag: 04.05.2001
(51) Int. Cl.: A23L 2/02, A23L 1/29, A23L 1/218, A23L 1/36, A23B 7/10, A61K 35/78, A23L 1/20

(54) **Verfahren zur Herstellung eines Naturproduktes durch Fermentation**
Process for preparing a natural product by fermentation
Procédé de préparation d'un produit naturel par fermentation

(30) Priorität: 09.05.2000 DE 10022530
(43) Veröffentlichungstag der Anmeldung: 14.11.2001
(73) Patentinhaber: Firma May, 85662 Hohenbrunn (DE)
(72) Erfinder: Niedermaier, Hans Dr., 85662 Hohenbrunn (DE)
(74) Vertreter: Draudt, Jutta

(56) Entgegenhaltungen:
- EP-A- 0 930 359
- US-A- 5 108 766
- US-A- 5 266 337
- DATABASE WPI Section Ch, Week 199315 Derwent Publications Ltd., London, GB; Class D16, AN 1993-124139 XP002244759 & SU 1 707 060 A (BAUSK AGRIC IND COMBINE PRESERVES DRINKS), 23. Januar 1992 (1992-01-23)
- MARSHALL V M ET AL: "Methods for making kefir and fermented milks based on kefir." JOURNAL OF DAIRY RESEARCH 1985 NAT. INST. FOR RES. IN DAIRYING, SHINFIELD, RG2 9AT, UK, Bd. 52, Nr. 3, Seiten 451-456, XP009012504
- DATABASE WPI Section Ch, Week 197915 Derwent Publications Ltd., London, GB; Class D13, AN 1979-29029B XP002244760 & SU 608 513 A (DAIRY IND RES INST), 27. April 1978 (1978-04-27)
- DATABASE WPI Section Ch, Week 200064 Derwent Publications Ltd., London, GB; Class B04, AN 2000-662807 XP002244761 & RU 2 149 639 C (TARASEVICH L F), 27. Mai 2000 (2000-05-27)

## Beschreibung

Die vorliegende Erfindung betrifft ein Verfahren zur Herstellung eines Naturproduktes gemäß Oberbegriff des Hauptanspruches.

Naturprodukte sind Produkte, die aus natürlich vorkommenden Rohmaterialien hergestellt werden. Zu solchen Rohmaterialien zählen Erzeugnisse, die die Erde hervorbringt, wie bspw. Früchte und Gemüse.

Daraus folgt, dass sich die Menschen seither mit diesen Naturprodukten, zumindest neben Fleisch und Fisch, ernähren. Insbesondere liegt heutzutage der Trend vor, sich ausschließlich mit Naturprodukten zu ernähren.

Es hat sich herausgestellt, dass solche Naturprodukte als Energiequelle und zur Steigerung des körperlichen Wohlbefindens dienen können, wenn diese mittels Einwirkung von Mikroorganismen oder Enzymen aufgeschlossen worden sind. Durch Einwirkung bestimmter Enzyme werden die Komponenten der Rohmaterialien in Bestandteile überführt, die vom Körper wohltuend akzeptiert werden und positiv in den Stoffwechsel eingreifen können.

Es ist bekannt, solche Naturprodukte herzustellen, indem man ein natürlich vorkommendes Rohmaterial oder ein Gemisch aus verschiedenen Rohmaterialien in Gegenwart von Mikroorganismen fermentiert. Ein solcher Fermentauszug wird dann gereinigt, bspw. durch Zentrifugation und/oder Filtration, um die unlöslichen Bestandteile zu entfernen. Ein solches fermentiertes Produkt kann dann in jeder Form zur Stärkung von Energie und Wohlbefinden eingenommen werden.

Es hat sich allerdings herausgestellt, dass die bisher bekannten Naturprodukte bzw. Biofermentauszüge weniger wirksam sind und kein besonders breites Wirkungsspektrum aufweisen. In den meisten Fällen kann selbst eine tägliche hohe Dosis nicht die erforderliche Wirkung in entsprechender Bandbreite anbieten.

Es ist daher Aufgabe der vorliegenden Erfindung, ein Verfahren zur Herstellung eines Naturproduktes zur Verfügung zu stellen, bei dem ein Naturprodukt entsteht, das selbst in geringer täglicher Verabreichung äußerst wirksam ist, um das Wohlbefinden und die Leistungsfähigkeit in einem breiten Wirkungsspektrum zu steigern.

Diese Aufgabe wird mit einem Verfahren gemäß Patentanspruch 1 gelöst. Die Unteransprüche betreffen bevorzugte Ausführungsformen des erfindungsgemäßen Verfahrens.

Die Erfindung betrifft weiterhin ein Naturprodukt, das nach dem erfindungsgemäßen Verfahren hergestellt worden ist.

Die Erfindung betrifft außerdem die Verwendung dieses Naturproduktes zur inneren und äußeren Verabreichung.

Die vorliegende Erfindung betrifft ein Verfahren zur Herstellung eines Rohproduktes aus einem Gemisch aus natürlich vorkommenden Rohmaterialien durch Fermentation der Rohmaterialien in Gegenwart von Mikroorganismen, das dadurch gekennzeichnet ist, dass ein Teil des Fermentauszuges mindestens einer weiteren Fermentation unterworfen wird und anschließend mit dem verbleibenden Teil des ersten Fermentauszuges vermischt wird.

Aus SU 1 707 060 ist die Herstellung von Frucht- und Beerenweinen bei welchen ein Teil des Materials der zweiten Fermentationsstufe in zwei Portionen geteilt wird bekannt. Die kleinere Portion wird dann zur Herstellung von Hefe verwendet, welche dann in der dritten Fermentationsstufe der größeren Portion weiter verwendet wird.

US 5 266 337 offenbart ein Fermentationsprodukt mit reduziertem Ethanolgehalt erhältlich dadurch, daß eine erste Teilmenge des Substrats mit Hefe fermentiert wird, woraufhin eine zweite Teilmenge des Substrats bei fortlaufender Behandlung mit Luft und Sauerstoff zudosiert wird.

Bei der vorliegenden kaskadenartigen Biofermentierung ist es erfindungsgemäß möglich, neue Abbauprodukte zu erzeugen. Dieses geschieht durch den Einsatz verschiedener Mikroorganismen unter Einstellung des pH-Wertes und der Kulturtemperatur.

Die Kaskadenfermentation mit mindestens einer Teilfermentation ermöglicht eine Vervielfältigung der Bio-Gerüstsubstanzen, die dem Organismus die Möglichkeit bieten, in jedem Moment eines seiner essentiellen 2.500 Enzyme selbst zu synthetisieren. Es deutet sehr viel darauf hin, dass auf diese Weise die übergeordneten Enzyme, d. h. die Hormone, zum benötigten Zeitpunkt völlig aktiviert werden können.

Es hat sich somit erfindungsgemäß herausgestellt, dass ein hochwirksames Naturprodukt hergestellt werden kann, wenn ein Teil des ersten Fermentauszuges mindestens einer weiteren Fermentation unterworfen wird. Dazu wird vorzugsweise etwa ein Drittel des ersten bzw. vorherigen Fermentauszuges, welcher zuvor durch Zentrifugation und Filtration gereinigt worden ist, abgetrennt und erneut fermentiert.

Diese weitere Fermentierung oder Teilfermentierung wird in Gegenwart von Mikroorganismen durchgeführt. Bevorzugt wird Lactobacillus rhamnosus verwendet.

Die Teilfermentation wird normalerweise bei einer Temperatur im Bereich von 20 bis 35°C durchgeführt. Die Temperatur hängt davon ab, welcher Mikroorganismus oder welches Enzym verwendet wird. In der Regel beträgt die Temperatur 28°C.

Der Zeitraum der Inkubation hängt vom verwendeten Mikroorganismus ab. Normalerweise ist der Zeitraum der Teilfermentation kürzer als derjenige des ersten Ansatzes, d. h. der anfänglichen Fermentation des Gemischs aus natürlich vorkommenden Rohmaterialien. Es kann ein Zeitraum von wenigen Stunden bis zu fünf Tagen möglich sein.

Das Teilferment wird dann wie der erste Fermentauszug durch Zentrifugation und Filtration nach herkömmlichen Verfahren gereinigt. Das gereinigte Teilferment wird dann mit dem verbleibenden Teil des ersten Fermentauszuges vermischt.

Schließlich werden dem erfindungsgemäß hergestellten Naturprodukt noch Zusätze, wie Glycerin, Safran und eine Kräutertinktur, hinzugesetzt. Das Glycerin wird wegen der Haltbarkeit des Naturproduktes verwendet, während die Kräutertinktur als Aroma des erfindungsgemäß hergestellten Naturproduktes dient. Als Kräutertinktur kann man eine Mischung aus frischen oder getrockneten Küchenkräutern nehmen. Die verwendete Menge dieser Zusätze liegt im üblichen Bereich.

Nach dem Erhitzen und Abfüllen der Mischung des Naturproduktes aus dem ersten Fermentauszug und dem Teilfermentauszug wird auf pH 4 eingestellt, dann auf 80°C erhitzt und in geeignete Flaschen abgefüllt. Die Flaschen werden dann in üblicher Weise luftdicht verschlossen.

Es hat sich als vorteilhaft herausgestellt, zwei Teilfermentationen durchzuführen. Diese Verfahrensvariante ist so ausgestaltet, dass von dem erfindungsgemäß hergestellten Naturprodukt wieder ein Teil abgetrennt wird, der einer weiteren zweiten Fermentation unterworfen wird. Dieser Teil wird dann anschließend mit dem verbleibenden Teil vermischt.

Es können beliebig viele Teilfermentationen durchgeführt werden. Es ist davon auszugehen, dass ein durch mehrere Kaskaden hergestelltes Naturprodukt eine besonders ungewöhnlich vielseitige Wirkungsbreite aufweist.

Als Rohmaterialien werden Früchte, Gemüse und Hülsenfrüchte jeglicher Art verwendet. Die Mischung an sich wird als nicht kritisch angesehen. Es ist praktisch jede Variation aus Früchten, Gemüsen und Hülsenfrüchten möglich.

Die Rohmaterialien können bspw. in einer Menge von 300 kg, bezogen auf einen 1000-Liter-Ansatz, verwendet werden. Vor ihrer Fermentierung werden sie auf übliche Weise zerkleinert, bspw. durch Schneiden und/oder Schreddern.

Für die Fermentierung der Rohmaterialien werden bevorzugt Mikroorganismen verwendet, die in Joghurt und Dickmilch enthalten sind. In der Regel setzt man auf einen 1000-Liter-Ansatz etwa 12,5 kg Joghurt und/oder Dickmilch an.

Nach einer Dauer von 10 bis 20 Tagen, was jeweils vom Ansatz und dem Joghurt und/oder der Dickmilch abhängt, wird der Fermentauszug auf Raumtemperatur abgekühlt und stehengelassen. Nach Zentrifugation und etwa zweimaliger Filtration liegt der gereinigte Fermentauszug vor. Von diesem Ansatz wird dann ein Drittel als zweiter Ansatz für die Teilfermentation entnommen. Weitere Teilfermentationen im Sinne einer Kaskadenfermentierung können, wie oben beschrieben, folgen.

Das erfindungsgemäß hergestellte Naturprodukt hat den Vorteil, dass es in niedriger Dosierung wirkungsvoll zur Erhaltung der Gesundheit und Aufrechterhalten des Wohlbefindens eingesetzt werden kann. Es dient als Energiequelle und zur Stärkung der Abwehrkräfte. Sein Wirkungsspektrum ist außerordentlich breit.

Das erfindungsgemäße Naturprodukt ist ein Bioprodukt und kann zur inneren und äußeren Verabreichung verwendet werden. Für die innere Verabreichung wird es in der Regel oral als Lebens- bzw. Nahrungsmittel oder Arzneimittel gegeben. Es kann in Form einer Flüssigkeit dargereicht werden. Es ist des Weiteren möglich, daraus ein Lyophilisat zu bilden, das dann bei Bedarf in Wasser aufgelöst werden kann. Es ist ebenfalls vorteilhaft, das erfindungsgemäß hergestellte Naturprodukt in Form von Tabletten, Pastillen, Granulaten, Ampullen, Tropfen and Sprays zu verabreichen.

Bei einer Flüssigkeit werden in der Regel drei Esslöffel am Tag eingenommen.

Es hat sich auch herausgestellt, dass das erfindungsgemäß hergestellte Naturprodukt äußerlich auf der Haut angewendet werden kann. Hier hat es sich als günstig erwiesen, wenn das Naturprodukt, das bspw. in Form einer Flüssigkeit vorliegt, in Wickel oder Kompressen eingegeben wird und dann auf die betroffenen Hautstellen gelegt wird.

Die vorliegende Erfindung wird nun anhand des folgenden Beispiels erläutert.

### Beispiel

300 kg Grundstoffe in Form von Datteln, Feigen, Walnüssen, Kokosnüssen, Zitronen, Zwiebeln, frische Keimsprossen, frischer Sellerie, frische Artischocken, Hirse, Erbsen und Sojabohnen werden manuell verkleinert und in einer geeigneten Apparatur zerschreddert. Die zerkleinerten Grundstoffe werden dann in einen geeigneten Bioreaktor überführt. Anschließend werden 30 kg Milchzucker als Gärungsstarter hinzugestreut.

Dieser Ansatz wird verrührt, wonach dann 12,5 kg eines Gemischs aus Dickmilch und Joghurt hinzugegeben werden. Anschließend wird mit Wasser auf 1000 1 aufgefüllt.

Die Temperatur des Bioreaktors wird auf 28°C eingestellt. Die Fermentierung dauert 14 Tage an, wobei etwa einmal am Tag gut umgerührt wird. Der Ansatz wird auf Raumtemperatur abgekühlt und stehengelassen. Anschließend wird er in einer geeigneten Zentrifuge von den gröbsten Feststoffen befreit. Durch zweimalige Filtration durch einen handelsüblichen Filter wird endgültig gereinigt. Das Filtrat zeigt sich als leicht trübe Flüssigkeit.

Von diesem Fermentauszug wird ein Drittel entfernt und in einen anderen Bioreaktor überführt. Dieses Drittel Fermentauszug wird auf 95°C zur Inaktivierung vorhandener Enzyme erhitzt und auf einen pH von 6,5 eingestellt. Danach werden dann 250 g Lactobacillus rhamnosus in handelsüblicher Form hinzugefügt. Es wird drei Tage bei 28°C inkubiert, wobei mindestens einmal am Tag gerührt wird. Es bildet sich durch die Spaltprodukte eine undurchsichtige Flüssigkeit, die wie oben durch Filtration gereinigt wird, wobei ein leicht trübes Filtrat erhalten wird.

Dieses Teilfiltrat wird dann mit dem ersten Fermentauszug vermischt und mit 67,5 l Glycerin, 3 kg Milchsäure, 100 g Safran und Kräutertinktur versetzt. Anschließend wird gut verrührt. Das so erhaltene flüssige Naturprodukt wird auf pH-Wert von 4 eingestellt, nochmals zentrifugiert und anschließend sofort heiß in Flaschen luftdicht abgefüllt.

## Patentansprüche

1. Verfahren zur Herstellung eines Naturprodukts aus einem Gemisch aus Früchten, Gemüsen und Hülsenfrüchten als Rohmaterialien mit den Stufen:
- Fermentierung der Rohmaterialien in Gegenwart von Mikroorganismen zur Herstellung eines Fermentauszugs;
- Unterwerfen eines Teils des Fermentauszugs mindestens einer weiteren Fermentation und
- Vermischen dieses Teils mit dem verbleibenden Teil des ersten Fermentauszugs.

2. Verfahren nach Anspruch 1, **dadurch gekennzeichnet, dass** die weitere Fermentierung in Gegenwart von Mikroorganismen oder Enzymen durchgeführt wird.

3. Verfahren nach Anspruch 2, **dadurch gekennzeichnet, dass** die Fermentierung mit Lactobacillus rhamnosus erfolgt.

4. Verfahren nach Anspruch 1, **dadurch gekennzeichnet, dass** etwa ein Drittel des ersten Fermentauszugs einer weiteren Fermentation unterworfen wird.

5. Verfahren nach Anspruch 4, **dadurch gekennzeichnet, dass** die Fermentation bei einer Temperatur im Bereich von 20 bis 35°C durchgeführt wird.

6. Verfahren nach Anspruch 5, **dadurch gekennzeichnet, dass** die Temperatur 28°C beträgt.

7. Verfahren nach Anspruch 1, **dadurch gekennzeichnet, dass** zwei Teilfermentationen durchgeführt werden.

8. Verfahren nach mindestens einem der vorangegangenen Ansprüche, **dadurch gekennzeichnet, dass** der erste Fermentauszug und die Teilfermentationen gereinigt werden.

9. Verfahren nach Anspruch 8, **dadurch gekennzeichnet, dass** die Reinigung durch Zentrifugation und Filtration erfolgt.

10. Verfahren nach einem der varangegangenen Ansprüche, **dadurch gekennzeichnet, dass** die Rohmaterialien in einer Menge von 300 kg, bezogen auf einen 1000 1 Ansatz, verwendet werden.

11. Verfahren nach mindestens einem der vorangegangenen Ansprüche, **dadurch gekennzeichnet, dass** als Mikroorganismen solche verwendet werden, die in Joghurt und Dickmilch enthalten sind.

12. Verfahren nach mindestens einem der vorangegangenen Ansprüche, **dadurch gekennzeichnet, dass** dem Naturprodukt Zusätze, wie Glycerin, Safran und eine Kräutermischung zugesetzt werden.

13. Naturprodukt, erhältlich durch das Verfahren nach mindestens einem der vorangegangenen Ansprüche.

14. Verwendung des Naturprodukts nach Anspruch 13 zur Herstellung einen Zusammensetzung zur inneren und äußeren Verabreichung.

15. Verwendung nach Anspruch 14 als Lebens- und Nahrungsmittel.

16. Verwendung nach Anspruch 14 in einem Wickel oder einer Kompresse.

## Claims

1. A process for preparing a natural product from a mixture of fruits, vegetables, and legumes as raw materials comprising the following steps:
fermentation of raw materials in the presence of micro-organisms for the preparation of a ferment extract;
submitting a portion of the ferment extract to at least one further fermentation and mixing this portion with the portion remaining from the first ferment extract.

2. The process according to claim 1, **characterised in that** the further fermentation is carried out in the presence of micro-organisms or enzymes.

3. The process according to claim 2, **characterised in that** the fermentation is carried out with Lactobacillus rhamnosus.

4. The process according to claim 1, **characterised in that** approximately a third of the first ferment extract is subjected to a further fermentation.

5. The process according to claim 4, **characterised in that** the fermentation is carried out at a temperature ranging from 20 to 35 °C.

6. The process according to claim 5, **characterised in that** the temperature is 28 °C.

7. The process according to claim 1, **characterised in that** two partial fermentations are carried out.

8. The process according to at least one of the preceding claims, **characterized in that** the first ferment extract and the partial fermentations are purified.

9. The process according to claim 8, **characterised in that** the purification is carried out by centrifugation and filtration.

10. The process according to any of the preceding claims, **characterised in that** raw materials are used in an amount of 300kg based on a 1000 l batch.

11. The process according to at least one of the preceding claims, **characterised in that** the micro-organisms used are such as those contained in yoghurt and soured milk.

12. The process according to at least one of the preceding claims, **characterised in that** additives such as glycerin, saffron and a herbal mix are added to the natural product.

13. A natural product obtainable by the process according to at least one of the preceding claims.

14. Use of the natural product according to claim 13 for preparing a composition for internal and external application.

15. The use according to claim 14 as foods and foodstuffs.

16. The use according to claim 14 in a wet pack or a compress.

## Revendications

1. Procédé de préparation d'un produit naturel à partir d'un mélange de fruits, légumes et légumineuses comme matériaux bruts comprenant les étapes suivantes:
fermentation des matériaux bruts en présence de micro-organismes pour la préparation d'un extrait de ferment;
soumission d'une part de l'extrait de ferment à au moins une autre fermentation et mélanger cette part avec la part restante du premier extrait de ferment.

2. Procédé suivant la revendication 1 **caractérisé par le fait que** l'autre fermentation soit réalisée en présence de micro-organismes ou d'enzymes.

3. Procédé suivant la revendication 2 **caractérisé par le fait que** la fermentation soit effectuée avec le Lactobacillus rhamnosus.

4. Procédé suivant la revendication 1 **caractérisé par le fait qu'**environ un tiers du premier extrait de ferment soit soumis à une autre fermentation.

5. Procédé suivant la revendication 4 **caractérisé par le fait que** la fermentation soit réalisée à une température dans la région de 20 à 35 °C.

6. Procédé suivant la revendication 5 **caractérisé par le fait que** la température soit de 28 °C.

7. Procédé suivant la revendication 1 **caractérisé par le fait que** deux fermentations partielles soient réalisées.

8. Procédé suivant au moins l'une des revendications précédentes **caractérisé par le fait que** le premier extrait de ferment et les fermentations partielles soient purifiés.

9. Procédé suivant la revendication 8 **caractérisé par le fait que** la purification soit effectuée par centrifugation et filtration.

10. Procédé suivant l'une des revendications précédentes **caractérisé par le fait que** les matériaux bruts soient utilisés en quantité de 300kg relatifs à un contenant de 1000 l.

11. Procédé suivant au moins l'une des revendications précédentes **caractérisé par le fait que** les micro-organismes utilisés soient tels que ceux contenus dans le yaourt et le lait caillé.

12. Procédé suivant au moins l'une des revendications précédentes **caractérisé par le fait que** des additifs tels que la glycérine, le safran et un mélange d'herbes soient ajoutés au produit naturel.

13. Produit naturel procurable par le procédé suivant au moins l'une des revendications précédentes.

14. Utilisation du produit naturel suivant la revendication 13 pour la préparation d'une composition à usage interne et externe.

15. Utilisation suivant la revendication 14 comme denrée alimentaire et aliments.

16. Utilisation suivant la revendication 14 dans un bandage ou dans une compresse.
